Europäisches Patentamt

European Patent Office

Office européen des brevets

(11) Veröffentlichungsnummer: **0 365 022 B1**

## EUROPÄISCHE PATENTSCHRIFT

(45) Veröffentlichungstag der Patentschrift: **20.10.93**

(51) Int. Cl.⁵: **C04B 38/10**, C22C 1/08

(21) Anmeldenummer: **89119483.9**

(22) Anmeldetag: **20.10.89**

Die Akte enthält technische Angaben, die nach dem Eingang der Anmeldung eingereicht wurden und die nicht in dieser Patentschrift enthalten sind.

(54) **Verfahren zur Herstellung von künstlichen Steinen.**

(30) Priorität: **21.10.88 DE 3835851**

(43) Veröffentlichungstag der Anmeldung:
**25.04.90 Patentblatt 90/17**

(45) Bekanntmachung des Hinweises auf die Patenterteilung:
**20.10.93 Patentblatt 93/42**

(84) Benannte Vertragsstaaten:
**AT BE CH DE ES FR GB GR IT LI LU NL SE**

(56) Entgegenhaltungen:
EP-A- 0 288 071
US-A- 1 944 008

CHEMICAL ABSTRACTS, vol. 96, no. 20, 17 Mai 1982 Columbus, Ohio, USA & SU-A-882964 (A.V.MAKARETS et al) 23-11-1981 Seite 345; ref. no. 186303M

WORLD PATENTS INDEX LATEST Accession No 84-297764 Week 48 DERWENT PUBLICA-TIONS LTD & JP-A-59184761 (INA SEITO KK) 20-10-1984

WORLD PATENTS INDEX LATEST Accessino No 84-065830 Week 11 DERWENT PUBLICA-TIONS LTD & JP-A-59021561 (NITTO SANGYO KK) 03-02-1984

(73) Patentinhaber: **Broggini, Arturo**
**Glockenstrasse 24**
**D-40476 Düsseldorf(DE)**

(72) Erfinder: **Broggini, Arturo**
**Glockenstrasse 24**
**D-40476 Düsseldorf(DE)**

(74) Vertreter: **Fitzner, Ulrich, Dr.**
**Konrad-Adenauer-Platz 17**
**D-40852 Ratingen-Lintorf (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung eines künstlichen Steins, der leicht und stabil sowie gegen Frost, Feuer und Witterung beständig ist und ein hohes Wärmedämmvermögen aufweist.

Steine, die teilweise die genannten Eigenschaften aufweisen, sind unter der Bezeichnung "Poroton" im Handel erhältlich. Es handelt sich hierbei um porige Hohllochziegel für Mauerwerk. Diese Ziegel sind wärmedämmend, schützen vor teuren Engergieverlusten und sorgen für ein ausgeglichenes Raumklima. Solche Ziegel entsprechen auch statischen Anforderungen. Nachteilig ist jedoch, daß diese Steine immer noch ein relativ hohes Gewicht haben. Außerdem ist die Herstellung mit Umweltbelastungen verbunden, weil Styropor$^R$ oder andere Schaumkunststoffe zur Erzeugung der Poren verbrannt werden. Auch Blähton hat teilweise die genannten Eigenschaften. Er findet jedoch nur als Granulat Anwendung. Die Erstellung von Gußelementen ist nur durch Zusatz von Bindemitteln möglich.

Ferner sind mit Sägemehl und anderen Füllstoffen erstellte Leichtbausteine bekannt. Diese haben jedoch Nachteile die darin zu sehen sind, daß Rückstände in Form von Asche nach dem Brand Salze bilden.

Aus Probst: Handbuch der Betonindustrie, 1962, Seiten 157, 158 sind sogenannte Schaumbetone bekannt. Bei deren Herstellung werden feinkörnige Sand-Zement-Gemenge durch Schaumbildende Mittel aufgetrieben, wobei Luftblasen entstehen, die als Poren zurückbleiben. Als schaumbildende Mittel werden Seifen eingesetzt. Da bei einfachem Rühren nur sehr lockere Schäume entstehen, müssen die Seifen in besonders schnellaufenden Rührwerken geschlagen werden, bis ein der Schlagsahne ähnliches stabiles Gebilde entsteht.

Probst: Handbuch der Betonsteinindustrie, 1962, S. 12 betrifft einen Barytzement, dessen Beständigkeit gegen Sulfate durch die Zugabe von kohlensaurem Barium gesteigert werden soll. Spezielle Angaben über quantitative Mengen und Schaumbaustoffe werden nicht gemacht.

Heuschkel-Muche: ABC Keramik, 1975, S. 23 und 166 beschreibt den Zusatz von Bariumcarbonat als Flußmittel. Hierbei wird darauf hingewiesen, daß der Zusatz von Bariumcarbonat eine hohe Schwindung verursacht und die Massen zur Blasenbildung neigen.

Aus Silikattechnik 1956, Seiten 329 und 330 sind sogenannte Schaumtone bekannt. Bei deren Herstellung nutzt man die Tatsache aus, daß die meisten flüssigen Tone bei etwa 1100°C zu schäumen beginnen. Als Blähhilfsmittel werden allenfalls Kalkstein, Dolomit oder eisenoxidreiche Stoffe zugesetzt.

Aus Silikattechnik 1960, Seite 339 sind schließlich sogenannte Schaumanhydride bekannt, die im Schaum- oder Gasverfahren hergestellt werden. Einzelheiten dieses Verfahrens werden jedoch dort nicht geschildert.

Aufgabe der Erfindung ist es nunmehr, ein Verfahren zur Herstellung eines künstlichen Steins durch Mischen a) eines durch vorheriges Mischen von Tensiden, Bariumcarbonat und Wasser erzeugten Schaums, b) Ton, tonhaltigem Material, Keramik, Gips, Zement, Kalk, Metall, Metalloxiden, einer Metallegierung oder einem Gemisch zweier oder mehrerer dieser Stoffe und c) Wasser, d) ggfs. Ausformen des so erhaltenen Gemischs, e) Trocknen und f) erforderlichenfalls Brennen der getrockneten Masse, zur Verfügung zu stellen, der die aufgezeigten Nachteile nicht hat und vielseitig verwendbar ist.

Diese Aufgabe wird erfindungsgemäß dadurch gelöst, daß bezogen auf den vorgemischten Schaum gemäß Schritt a) der Anteil der Tenside 0,03 bis 0,5 Gew.-%, an Bariumcarbonat 0,01 bis 1 Gew-% und an Wasser 98,5 bis 99,96 Gew.-% und bezogen auf das Gesamtgemisch der Anteil des Schaums gemäß Schritt a) 1,5 bis 8 Gew.-%, des Materials gemäß Schritt b) 30 bis 74 Gew.-% und des Wassers gemäß Schritt c) 68,5 bis 18 Gew.-% beträgt.

Bevorzugt werden für den Schaum gemäß Schritt a) 1,5 bis 7 Gew.-%, für das Material gemäß Schritt b) 48,5 bis 74 Gew.-% und für das Wasser gemäß Schritt c) 50 bis 19 Gew.-%.

Unter Tensiden werden vorliegend Aniontenside,(z.B. Seifen, Alkansulfonate, Olefinsulfonate, Estersulfonate, Alkylarylsulfonate, Alkylsulfonate, Alkylsulfate, Ethersulfate, Fettalkoholsulfate) Kationtenside, (z.B. geradkettige und cyclische Ammoniumverbindungen, Benzalkoniumchloride, quartäre Ammoniumsalze, Aminsalze, Pyridiniumsalze) nichtionogene Tenside (z.B. Polyether, Aminoxide, Fettsäureester von Polyalkoholen), Amphotenside (z.B. Glycinderivate mit Betain-Struktur, Sulfobetaine) verstanden. Erfindungsgemäß werden Aniontenside bevorzugt.

Als Tensid können Seifen im Gemisch mit den anderen oben genannten oberflächenaktiven Substanzen verwendet werden. Unter Seifen sind hierbei u.a. wasserlösliche Natrium- und Kaliumsalze der gesättigten und ungesättigten höheren Fettsäuren, der Harzsäuren des Kolaphoniums und der Naphtensäuren zu verstehen. Ebenso können aber auch Metallseifen, d.h. Salze der genannten Säuren mit anderen Metallen in Betracht kommen.

Die Komponente b) besteht aus den oben angeführten Substanzen. Zu den einsetzbaren Tonen gehören u.a. Begußton, Glasurton, Blähton, Steinzeugton, Steingutton, Bentonit, Hafenton, Kapselton, Ziegelton und Mergelton.

Unter Keramik werden hier anorganische, nichtmetallische Werkstoffe verstanden, die in der Regel Kristall- und Glasphase nebeneinander enthalten. Hierzu zählen u.a. Keramiken auf Silikatbasis (tonkeramische Wirkstoffe), z.B. Ziegel, Terrakotten, Schamotte, Tonsteine, Feuertonwaren. Ebenso sind in diesem Zusammenhang sonderkeramische Werkstoffe zu erwähnen, d.h. Silikasteine, Forsteritsteine, Korundsteine, SiC-Steine. Ferner sind unter Keramik auch auf nichtsilikatischen (z.B. $Al_2O_3$, $MgO$, $ZrO_2$) und nichtoxidischen (z.B. Carbide, Nitride, Boride) Verbindungen basierende Stoffe zu verstehen. Eine erfindungsgemäß besonders geeignete Verbindung ist Bariumcarbonat.

Unter Gips werden vorliegend die Dihydrate ($CaSO_4 \cdot 2H_2O$), Halbhydrate ($CaSO_4 \cdot 1/2\ H_2O$) und die Anhydrite ($CaSO_4$) des Kalziumsulfats verstanden.

Als Zement kommen handelsüblicher Portlandzement, Eisenportlandzement, Hochofenzement und Traßzement in Betracht. Die chemisches Zusammensetzung der vorzugsweise für die vorliegende Erfindung geeigneten Zemente kann der folgenden Tabelle entnommen werden:

| | | Portland-zement | Eisen-port-land-zement | Hoch-ofen-zement | Traß-zement |
|---|---|---|---|---|---|
| CaO | H | 69 | 66 | 60 | 58 |
| | M | 64 | 59 | 51 | 51 |
| | N | 61 | 52 | 43 | 43 |
| SiO₂ | H | 24 | 26 | 32 | 28 |
| | M | 20 | 22 | 27 | 27 |
| | N | 18 | 19 | 23 | 25 |
| Al₂O₃ TiO₂ | H | 8 | 10 | 14 | 9 |
| | M | 5 | 7 | 9 | 7 |
| | N | 4 | 4 | 6 | 6 |
| Fe₂O₃ (FeO) | H | 4 | 4 | 3 | 3,5 |
| | M | 2,5 | 2 | 1,5 | 3,0 |
| | N | 1 | 1 | 0,5 | 2,5 |
| Mn₂O₃ (MnO) | H | 0,5 | 1,0 | 2,5 | 0,3 |
| | M | 0,1 | 0,3 | 0,5 | 0,2 |
| | N | 0,0 | 0,0 | 0,1 | 0,1 |
| MgO | H | 4,0 | 5,0 | 9,5 | 3,0 |
| | M | 1,5 | 2,5 | 3,5 | 2,0 |
| | N | 0,5 | 0,5 | 1,0 | 1,0 |
| SO₃ | H | 3,5 | 4,0 | 4,5 | 3,0 |
| | M | 2,5 | 2,5 | 2,5 | 2,5 |
| | N | 2,0 | 2,0 | 1,0 | 2,0 |

Die Werte geben die in konzentrierter Salzsäure löslichen Bestandteile in Gew.-% an, bezogen auf den glühverlustfreien Zement.

H = Höchstwert, M = Mittelwert, N = Niedrigstwert.

Als Kalk kommmen sämtliche handelsüblichen Sorten in Betracht, insbesondere Branntkalk (85 bis 95% CaO), Kohlensaurer Kalk (80 bis 95% $CaCO_3$), Hüttenkalk (47% CaO), Konverter Kalk (45% CaO), Thomaskalk (46% CaO), Löschkalk (60 bis 70% CaO), Mischkalk (60 bis 65% CaO), Stückkalk (90% CaO). Ebenso kommen magnesiumhaltige Kalke zur Anwendung, z.B. Magnesium-Branntkalk (70 bis 80% CaO und 15% MgO).

Als Metalle kommen vor allem Eisen, Cobalt und Zink zur Anwendung. Ebenso werden bevorzugt Oxide oder Legierungen dieser Metalle eingesetzt.

Die nach dem erfindungsgemäßen Verfahren hergestellten Steine sind aufgrund ihres geringen Gewichts für die Erstellung von Bauelementen der verschiedensten Art geeignet. Sie sind insbesondere auch für Möbelteile verwendbar. Das Material ist beständig gegen Hitze und Feuer, gegen Kälte, UV-Strahlen und sonstige Witterungseinflüsse. Ebenso zeichnet sich das erfindungsgemäße gebrannte Material besonders durch seine Beständigkeit gegen Frost und verschiedene Chemikalien aus.

Die nach dem erfindungsgemäßen Verfahren hergestellten Steine eignen sich auch als Leichtbausteine. Diese weisen nicht die Nachteile der bisher bekannten Leichtbausteine auf und ermöglichen eine Anwendung in vielen Bereichen. Sie können für belastetes und unbelastetes Mauerwerk verwendet werden und bieten eine entsprechend hohe Wärmedämmung. Das Material ist leicht zu sägen und zu transportieren. Die nach dem erfindungsgemäßen Verfahren hergestellten Steine unterscheiden sich von herkömmlichen Leichtbaustoffen auch durch ihre Schaumstruktur.

Aufgrund des geringen Gewichts und der Stabilität sowie der Feuer- und Frostbeständigkeit sind die nach dem erfindungsgemäßen Verfahren hergestellten Steine auch besonders für die Erstellung von Filteranlagen in Innen- und Außenräumen geeignet. Die Tatsache, daß das Material UV-strahlenbeständig ist, ermöglicht seine Anwendbarkeit mit einer langen wartungsfreien Lebensdauer. Insbesondere für Anlagen mit geringen Belastungsmöglichkeiten bieten die Steine aufgrund des geringen Gewichts neue Gestaltungsmöglichkeiten. Die einzelnen Steine können hierbei mit verschiedenen handelsüblichen Bindemitteln zusammengefügt werden.

Die Verwendung der nach dem erfindungsgemäßen Verfahren hergestellten künstlichen Steine liegt vor allem im Bausektor. Beispielsweise sind die Steine als Bausteine, Bauplatten und Isolierfasadenplatten einsetzbar. Ebenso ist das Material für Natursteinimitationen geeignet. Ein weiteres Anwendungsgebiet sind der Bau von Feuerschutzelementen, Brunnenanlagen, Öfen, Filteranlagen, Biotopen, Riffbau, Füllstoffen und Granulaten sowie die Erstellung von künstlichen Knochen und Gelenken, sowie die Kieferchirurgie.

Schließlich können die erfindungsgemäßen Steine als Trägermaterial oder Füllmaterial in Reaktoren, insbesondere Festbettreaktoren eingesetzt werden. Das Trägermaterial ist vor allem für die Immobilisierung von Biokatalysatoren geeignet. Beispiele für solche Biokatalysatoren sind Enzyme, pflanzliche oder tierische Zellen sowie Mikroorganismen. Immobilisierungen mit den erfindungsgemäßen Steinen kommen bei den verschiedensten Bioverfahren, insbesondere aber in der Abwasserreinigung in Betracht.

Besonders gute Ergebnisse lassen sich erzielen, wenn der Anteil des Materials gemäß Schritt b) annähernd dem des Wassers gemäß Schritt c) entspricht. Die Gewichtsprozente liegen in diesem Fall bei 1,5 bis 2,5 (Schritt a), 30 bis 68,5 (Schritt b) und 68,5 bis 29 (Schritt c).

Hervorzuheben ist, daß durch Verwendung von Bariumcarbonat oder eines Gemisches von Titandioxid und Bariumcarbonat oder eines Gemisches von Titandioxid und Benthonit in Schritt b) sich besonders gute Ergebnisse erzielen lassen. Daneben werden die in den folgenden Beispielen genannten Gemische für Schritt b) bevorzugt:

| 1. Zusammenstellung Gemische (Anteilein %) | |
|---|---|
| Quarzmehl | 62,5 % |
| Gips | 12,5 % |
| Glasur Transp. | 12,5 % |
| Glasfaser | 12,5 % |

| 2. Zusammenstellung | |
|---|---|
| Quarzmehl | 55 |
| Gips | 12 |
| Glasur | 22 |
| Ton | 11 |

| 3. Zusammenstellung | |
|---|---|
| Quarzmehl | 67 |
| Gips | 17 |
| Ton | 16 |

| 4. Zusammenstellung | |
|---|---|
| Quarzmehl | 80 |
| Glasur Transp. | 20 |

| 5. Zusammenstellung | |
|---|---|
| Quarzmehl | 58,8 |
| Titandioxid | 5,0 |
| Ton | 11,8 |
| Glasfaser | 0,8 |
| Glasur oder Glas | 11,8 |
| Gips | 11,8 |

| 6. Zusammenstellung | |
|---|---|
| Glasfaser | 25 |
| Ton | 25 |
| Glasur oder Glas | 25 |
| Gips | 25 |

| 7. Zusammenstellung | |
|---|---|
| Gips | 50 |
| Glasfaser | 50 |

| 8. Zusammenstellung | |
|---|---|
| Stückgips | 40 |
| Glasfaser | 40 |
| Titandioxid | 20 |

| 9. Zusammenstellung | |
|---|---|
| Caolin | 71 |
| Gips | 14 |
| Glasur oder Glas | 15 |

| 10. Zusammenstellung | |
|---|---|
| Schamotte | 60 |
| Zement | 20 |
| Glasur oder Glas | 20 |

| 11. Zusammenstellung | |
|---|---|
| Zement | 80 |
| Glasur oder Glas | 20 |

| 12. Zusammensetzung | |
|---|---|
| Zement | 20 |
| Quarzmehl | 40 |
| Schamotte | 40 |

| 13. Zusammensetzung | |
|---|---|
| Titandioxid | 90 |
| Bentonite | 10 |

| 14. Zusammensetzung | |
|---|---|
| Gips | 50 |
| Glasur oder Glas | 50 |

| 15. Zusammensetzung | |
|---|---|
| Quarzmehl | 70 |
| Gips | 15 |
| Glasur oder Glas | 15 |

| 16. Zusammensetzung | |
|---|---|
| Quarzmehl | 25 |
| Gips | 25 |
| Glasfaser | 25 |
| Schamotte | 25 |

| 17. Zusammensetzung | |
|---|---|
| Gips | 70 |
| Bariumcarbonat | 30 |

| 18. Zusammensetzung | |
|---|---|
| Cobaltoxid | 50 |
| Ton | 50 |

| 19. Zusammensetzung | |
|---|---|
| Kreide | 62,5 |
| Gips | 12,5 |
| Glasur oder Glas | 25 |

| 20. Zusammenstellung | |
|---|---|
| Quarzmehl | 60 |
| Kalk | 20 |
| Glasur Transp. oder Glas | 20 |

| 21. Zusammenstellung | |
|---|---|
| Quarzmehl | 60 |
| Kalk | 40 |

| 22. Zusammensetzung | |
|---|---|
| Keramische Fasern | 70 |
| Ton | 30 |

| 23. Zusammensetzung | |
|---|---|
| Gips | 30 |
| Metalloxide | 70 |

| 24. Zusammensetzung | |
|---|---|
| Zement | 30 |
| Metalloxide | 70 |

| 25. Zusammensetzung | |
|---|---|
| Metalloxide | 80 |
| Ton | 20 |

| 26. Zusammensetzung | |
|---|---|
| Quarzmehl | 58 |
| Kali-, Natron- oder Kalkspat | 12 |
| Ton | 19 |
| Gips | 11 |

| 27. Zusammensetzung | |
|---|---|
| Quarzmehl | 21 |
| Kali-, Natron- oder Kalkspat | 21 |
| Ton | 37 |
| Gips | 21 |

| 28. Zusammensetzung | |
|---|---|
| Quarzmehl | 75 |
| Ton | 12 |
| Gips | 12 |
| Glasfaser | 1 |

| 29. Zusammensetzung | |
|---|---|
| Ton | 48 |
| Altglas (gemahlen) | 48 |
| Titandioxid | 1 |
| Glasfaser | 1 |

Durch verschiedene Zusatzstoffe können die chemische Affinität zwischen den einzelnen Komponenten und die Festigkeit des Endprodukts erhöht werden. Beispiele hierfür sind Bentonite, Titandioxid Mineralfasern und Bariumcarbonat, sofern diese Stoffe nicht bereits in Schritt b) zugegeben wurden. Die Festigkeit des Endprodukts kann insbesondere durch Tränken des eingesetzten Gemischs in verschiedenen Glasuren und/oder Imprägnierungsmitteln, wie Kunststoffen, Reaktionsharzen, flüssigem Glas und Mineralstoffen ebenfalls erhöht werden. Die Zugabe von Gips hat zur Folge, daß sich schon nach etwa einer halben Stunde das Gemisch versteift.

Im Gegensatz zum bisherigen Stand der Technik wird zunächst ein Schaum durch Mischen von Tensiden, Bariumcarbonat und Wasser hergestellt. Hierfür werden 0,03 bis 0,5 Gew.-% Tensid, 0,01 bis 1 Gew.-% Bariumcarbonat und 98,5 bis 99,96 Gew.-% Wasser, bezogen auf 100% Schaum, verwendet.

Durch das Vorhandensein von Bariumcarbonat in Seifen und Tensiden läßt sich bereits bei leichtem Rühren eine stabile Schaumstruktur erreichen, die bei alleiniger Anwendung von Seifen und/oder Tensiden schneller verfallen und bei der Trocknung nicht erhalten bleibt. An das kolloide Bariumcarbonat lagern sich die Stoffe der Komponenten b an. Hierdurch ist es möglich, mit den verschiedenartigsten Rohstoffen Schaumbaustoffe zu erzeugen. Insbesondere sind die als Komponenten b bezeichneten Substanzen und deren Gemische für die vorliegende Erfindung geeignet. Außerdem läßt sich bei Einsatz von Bariumcarbonat die Menge an schaumbildenden, d.h. ausbrennbaren Stoffen reduzieren.

Insbesondere sind nur noch geringe Mengen an Tensiden nötig. Ferner wird durch den erfindungsgemäßen Zusatz von Bariumcarbonat das sogenannte "Ausblühen" verhindert, d.h., die vorhandenen löslichen Salze (Chloride, Sulfate) werden in unlösliches Bariumsulfat überführt. Schließlich dient Bariumcarbonat als Flußmittel. Hierbei lassen sich matte oder glänzende Produkte erzeugen.

Die aufgeschäumte Emulsion bildet eine glatte Schalenstruktur, die durch Zusatz verschiedener Stoffe beliebig gehärtet oder auch poröser gemacht werden kann und beim Ofenbrand ausgebrannt wird. Die ausbrennbaren Bestandteile sind sehr viel geringer als bisher bekannt und hinterlassen keine Rückstände. Die Emulsionen sind daher schwer entflammbar, raumsparend, umweltfreundlich und feuchtigkeitsunempfindlich.

Erst nachdem der Schaum hergestellt worden ist, wird dieser mit Wasser und Ton, Keramik, Gips, Zement, Kalk, Metalle Metalloxid, einer Metallegierung oder Gemischen dieser Stoffe vermischt. Durch das spezielle Herstellungsverfahren wird ein geschäumter Stein in besonders einfacher Weise erzeugt; denn die Schaumbildung ist nicht von bei einer bestimmten Temperatur schäumenden Tonen abhängig. D.h. eingesetzte Materialien und Temperaturen lassen sich in weiten Grenzen variieren. Wesentlich für die Bildung der Schaumstruktur ist nur das Vorhandensein der angegebenen Minimalmenge an Bariumcarbonat und Tensid, wobei bemerkenswert ist, daß die eingesetzten Mengen wesentlich geringer sind als bei der bisher bekannten alleinigen Verwendung von Seife. Eine variierte Schaumstruktur läßt sich durch Zusatz an sich bekannter Füllstoffe erreichen Beispiele hierfür sind Polystyrol und Blähtone (Korund). Insbesondere lassen sich auf diese Weise Gitterstrukturen erreichen.

Das Trocknen wird vorzugsweise im Heißluftstrom durchgeführt. Die Brenntemperaturen liegen vorzugsweise zwischen 900 und 1.700°C.

## Patentansprüche

1.  Verfahren zur Herstellung eines künstlichen Steins durch Mischen
    a) eines durch vorheriges Mischen von Tensiden, Bariumcarbonat und Wasser erzeugten Schaums,
    b) Ton, tonhaltigem Material, Keramik, Gips, Zement, Kalk, Metall, Metalloxid, einer Metallegierung oder einem Gemisch zweier oder mehrerer dieser Stoffe und
    c) Wasser,
    d) ggfs. Ausformen des so erhaltenen Gemischs,
    e) Trocknen und
    f) erforderlichenfalls Brennen der getrockneten Masse,
    **dadurch gekennzeichnet,** daß bezogen auf den vorgemischten Schaum gemäß Schritt a) der Anteil der Tenside 0,03 bis 0,5 Gew.-%, an Bariumcarbonat 0,01 bis 1 Gew.-% und an Wasser 98,5 bis 99,96 Gew-% und bezogen auf das Gesamtgemisch der Anteil des Schaums gemäß Schritt a) 1,5 bis 8 Gew.-%, des Materials gemäß Schritt b) 30 bis 74 Gew.-% und des Wassers gemäß Schritt c) 68,5 bis 18 Gew.-% beträgt.

2.  Verfahren gemäß Anspruch 1,
    **dadurch gekennzeichnet,** daß der Anteil des Schaums gemäß Schritt a) 1,5 bis 7 Gew.-%, des Materials gemäß Schritt b) 48,5 bis 74 Gew.-% und des Wassers gemäß Schritt c) 50 bis 19 Gew.-% beträgt.

3.  Verfahren gemäß Anspruch 1,
    **dadurch gekennzeichnet,** daß der Anteil des Schaums gemäß Schritt a) 1,5 bis 2,5 Gew.-%, des Materials gemäß Schritt b) 30 bis 68,5 Gew.-% und des Wassers gemäß Schritt c) 68,5 bis 29 Gew.-% beträgt.

## Claims

1.  A process for the production of an artificial stone by mixing
    a) foam generated by previous mixing of surface-active agents, barium carbonate and water,
    b) clay, clay-containing material, ceramics, gypsum, cement, lime, metal, metal oxide, a metal alloy or a mixture of two or more of these substances, and
    c) water,
    d) optionally molding the resulting mixture,
    e) drying, and
    f) if necessary calcining the dried composition,
    characterized in that, based on the premixed foam according to step a), the portion of surface-active agents is 0.03 to 0.5 % by weight, that of barium carbonate is 0.01 to 1 % by weight and that of water is 98.5 to 99.96 % by weight and, based on the total mixture, the portion of the foam according to step a) is 1.5 to 8 % by weight, that of the material according to step b) is 30 to 74 % by weight and that of the water according to step c) is 68.5 to 18 % by weight.

2. The process according to claim 1
characterized in that the portion of the foam according to step a) is 1.5 to 7 % by weight, that of the material according to step b) is 48.5 to 74 % by weight, and that of the water according to step c) is 50 to 19 % by weight.

3. The process according to claim 1
characterized in that the portion of the foam according to step a) is 1.5 to 2.5 % by weight, that of the material according to step b) is 30 to 68.5 % by weight, and that of the water according to step c) is 68.5 to 29 % by weight.

**Revendications**

1. Procédé de fabrication d'une pierre artificielle obtenue par mélange
   a) d'une mousse obtenue en mélangeant préalablement des tenso-actifs, du carbonat de baryum et de l'eau
   b) de l'argile ,du materiau contenant de l'argile, de la céramique, du plâtre, du ciment,de la chaux, du métal, de oxyde de métal ,un alliage métallique ou un mélange de deux ou plusieurs de ces materiaux
   c) d'eau
   d) le cas échéant mouler le mélange ainsi obtenu
   e) sécher et
   f) éventuellement cuire la masse séchée
   caractérisé par le fait que, référé a la mousse mélangée préalablement selon point a) la part de tenso-actifs est entre 0,03 et 0,5 poids-%, la part de carbonat de baryum est entre 0.01 et 1.0 poids-% et la part d'eau est entre 98,5 et 99,96 poids-% et référé au mélange de la part de mousse selon le point a) est entre 1,5 et 8 poids-% du materiau selon le point b) est entre 30 jusqu'à 74 poids-% et de l'eau selon point c) est entre 68,5 jusqu'à 18 poids %.

2. Procédé selon la révendication 1
caractérisé par le fait que le part de mousse selon le point a) est de, 1,5 jusqu'a 7 poids % du materiau selon le point b) est de 48,5 jusqu'à 74 poids % et le part d'eau selon le point c) de 50 jusqu'à 19 poids-%.

3. Procédé selon la révendication 1
caractérisé par le fait que la part de mousse selon le point a) est de 1,5 jusqu'à 2,5 poids-% du materiau selon le point b) de 30 jusqu'à 68,5 poids-% l'eau selon le point c) de 68,5 jusqu'à 29 poids-%.